# EUROPEAN PATENT SPECIFICATION

(11) **EP 2 506 050 B1**
(45) Date of publication and mention of the grant of the patent: **23.12.2020**
(21) Application number: 10833243.8
(22) Date of filing: 25.11.2010
(51) Int. Cl.: G02B 6/255

(54) **REINFORCING MEMBER AND REINFORCING METHOD FOR FUSION SPLICED PORTIONS OF OPTICAL FIBERS**
VERSTÄRKUNGSELEMENT UND VERSTÄRKUNGSVERFAHREN FÜR FUSIONSGESPLEISSTE TEILE VON GLASFASERN
ELÉMENT DE RENFORCEMENT ET PROCÉDÉ DE RENFORCEMENT POUR DES PARTIES DE FIBRES OPTIQUES À ÉPISSURE PAR FUSION

(30) Priority: 25.11.2009 JP 2009267747; 22.01.2010 JP 2010011879
(43) Date of publication of application: 03.10.2012
(73) Proprietor: Sumitomo Electric Industries, Ltd., Chuo-ku Osaka-shi Osaka 541-0041 (JP)
(72) Inventor: SATO Ryuichiro, Yokohama-shi Kanagawa 244-8588 (JP); TOYOOKA Hiroyasu, Yokohama-shi Kanagawa 244-8588 (JP); HOMMA Toshihiko, Yokohama-shi Kanagawa 244-8588 (JP); MURASHIMA Kiyotaka, Yokohama-shi Kanagawa 244-8588 (JP)
(74) Representative: Hoffmann Eitle
(86) International application number: PCT/JP2010/070978
(87) International publication number: WO 2011/065397

(56) References cited:
- EP-A1- 2 103 975
- JP-A- H09 297 243
- JP-A- 2004 038 019
- JP-A- 2004 309 841
- JP-A- 2006 171 132
- JP-U- H04 124 205
- US-A- 5 832 162
- US-A- 6 099 170

## Description

### Technical Field

The present invention relates to a reinforcing member for collectively reinforcing, as a single body, a plurality of coated optical fibers which have been individually fusion-spliced, and to a reinforcing method using the reinforcing member.

### Background Art

Optical fibers are fusion-spliced to each other by removing fiber coatings of end portions to be fusion-spliced of the optical fibers, and heating and fusing end portions of the exposed glass fiber portions to fusion-splice their end portions. The glass fiber portions fusion-spliced to each other, where the fiber coatings are removed, are weak in mechanical strength, and therefore are protected and reinforced by a reinforcing member. This reinforcing member is usually formed by accommodating a rod-shaped tensile strength body and a tube-shaped heat-fusible adhesive member in a heat-shrinkable tube which shrinks radially by heating.

Further, by the development of an optical communication network, many coated optical fibers are handled in many cases. For example, after plural coated optical fibers have been fusion-spliced, each fusion-splicing portion is subjected to reinforcement and the reinforced fusion-splicing portions are accommodated in a junction box collectively. At this time, in case that the fusion-splicing optical fibers are reinforced one by one, large space is required in order to accommodate reinforcing. members, so that there is a problem that the junction box becomes large in size. As a method of solving this problem, for example, it has been disclosed in JP 3567446 B that: in a heat-shrinkable tube, plural heat-fusible adhesive tubes are arranged; a splicing portion of coated optical fibers is inserted into each heat-fusible adhesive tube; and a plurality of fusion-splicing coated-optical-fibers are reinforced by a single reinforcing member collectively.

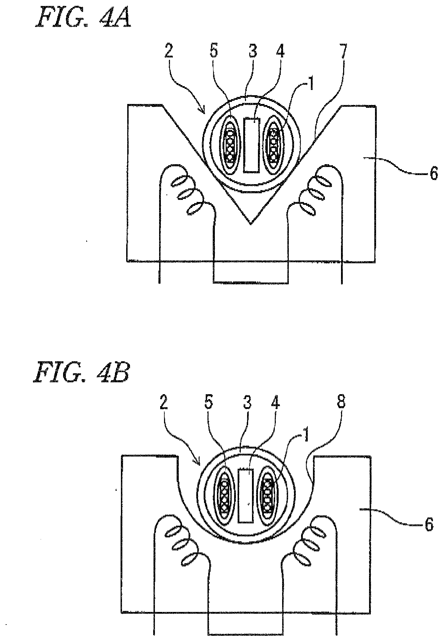

Fig. 4A and 4B show an example of a reinforcing method which has been disclosed in JP 3567446 B. A reinforcing member 2 is configured to accommodate, in a single heat-shrinkable tube 3, a tensile strength body 4 and plural heat-fusible adhesive tubes 5. made of heat-fusible adhesive resin. The tensile strength body 4 has the shape of, for example, a flat plate having flat surfaces on both sides. In two-sided vacant space portions between these flat surfaces and the heat-shrinkable tube 3, the heat-fusible adhesive tubes 5 are separately arranged, and into each heat-fusible adhesive tube 5, a ribbon-shaped coated optical fiber 1 is inserted, whereby fusion-splicing portions of the plural coated optical fibers are reinforced collectively. A heater platform 6 in this case has, on its surface where the reinforcing member 2 is accommodated and placed, a V-groove 7 having a V-section as shown in Fig. 4A or a U-groove 8 having a U-section as shown in Fig. 4B.

The reinforcing member 2 is heated by heat from a recess-shaped wall surface constituted by the V-groove 7 or the U-groove 8, and the heat-shrinkable tube 3 shrinks with heat thereby to decrease the vacant space volume in the tube. Simultaneously, the heat-fusible adhesive tube 5 melts thereby to infill the vacant space portion in the heat-shrinkable tube 3, and encloses the exposed fusion-splicing portion and the peripheral portion thereof. Thereafter, the melted heat-fusible adhesive tube 5 is solidified, whereby the heat-shrinkable tube 3, the tensile strength body 4 and the coated optical fibers 1 including the fusion-splicing portions are integrated, and the reinforcement is completed.

US 6,099,170 discloses a sleeve and method for protecting a splice of an optical fiber. The sleeve includes a support member and a plurality of optical fibers with the splice and being adjacent the support member. A heat deformable inner tube encompasses each of the plurality of optical fibers at the splice and a heat deformable outer tube encompasses at least partially the support member, the plurality of optical fibers at the splice, and each of the inner tubes. The method includes the acts of sliding the sleeve over a first free end of a plurality of optical fibers such that one of the inner tubes encompasses each of the fibers and then splicing the first free end of the plurality of optical fibers to a corresponding second free end of the plurality of optical fibers. Subsequently, the sleeve is slide over the splice of the first and second free ends and heat is applied to the sleeve to further strengthen the splice upon cooling.

### Summary of Invention

### Technical Problem

According to the reinforcing member disclosed in the above-mentioned JP 3567446 B, fusion-splicing portions of the two ribbon-shaped coated optical fibers can be reinforced collectively by the single reinforcing member. Further, by making the tensile strength body square in section, the heat-fusible adhesive tubes can be arranged on four sides, so that fusion-splicing portions of four ribbon-shaped coated optical fibers can be reinforced collectively.

However, since the plural heat-fusible adhesive tubes are arranged oppositely to each other with the tensile strength body between, it is necessary, in order to melt these heat-fusible adhesive tubes uniformly and obtain a good adhesive state, to form the heating surface of the heater platform into the V-shaped or U-shaped wall surface as described above, so that the heater has the special shape and therefore becomes a heating mechanism which creates high cost. Further, since the coated optical fibers are arranged with the tensile strength body between, a clamping part which clamps both sides of the reinforcing part becomes large in size or a plurality of clamping parts become necessary. Therefore, from this point, the high cost is also created.

The invention has been made in view of the above-mentioned circumstances, and one of objects of the invention is to provide a reinforcing member of optical fiber fusion-splicing portion and a reinforcing method thereof, in which plural coated optical fibers can be collectively reinforced in the high density, and a heating mechanism for collective reinforcement can be constituted at a low cost.

### Solution to Problem

A reinforcing member of optical fiber fusion-splicing portion according to the present invention is defined by claim 1. It reinforces fusion-splicing portions of plural single-core optical fibers collectively, includes a heat-shrinkable tube, a rod-shaped tensile strength body which is arranged so that a part of its surface comes into contact with an inner surface of the heat-shrinkable tube, and plural tube-shaped heat-fusible adhesive members which are arranged in the heat-shrinkable tube and into which the fusion-splicing portions- of the single-core optical fibers are individually inserted. This reinforcing member is characterized in that all of the plural tube-shaped heat-fusible adhesive members are arranged in one of space portions formed between the tensile strength body and the heat-shrinkable tube. Each gap produced by the tensile strength body, the heat-shrinkable tube, and the plural tube-shaped heat-fusible adhesive members have such a size that insertion of the single-core coated optical fiber is prevented.

According to a preferred embodiment specified in claim 2, a reinforcing method of optical fiber fusion-splicing portion according to the invention is characterized by reinforcing fusion-splicing portions of plural single-core optical fibers collectively by means of the above reinforcing member.

### Advantageous Effects of Invention

According to an embodiment of the invention, all the tube-shaped heat-fusible adhesive members, without the tensile strength body between, in one of the space portions formed between the tensile strength body and the heat-shrinkable tube, are arranged in array or in a trefoil formation state. Therefore, as a heater for heat-processing, a heater having a heating surface of not the special shape but the simply planar shape can be used, which can create low cost. Further, the coated optical fibers, without coming into contact with one another by the individual tube-shaped heat-fusible adhesive members, can be efficiently assembled together, being clamped by a clamp part having no especially large size.

### Brief Description of Drawings

Fig. 1A and 1B show an outline of a reinforcing member according to an embodiment of the invention.
Fig. 2A, 2B, and 2C show the reinforcing member according to one embodiment of the invention.
Fig. 3A and 3B show the reinforcing member according to another embodiment of the invention.
Fig. 4A and 4B show a conventional art.

### Description of Embodiments

With reference to drawings, embodiments of the invention will be described. In the drawings, a reference numeral 10 represents a glass fiber portion, 10a represents a fusion-splicing portion, 11 represents a coated optical fiber, 12 represents a reinforcing member, 13 represents a heat-shrinkable tube, 14 represents a tensile strength body, 15 represents a tube-shaped heat-fusible adhesive member, 16 represents a heater, 16a represents a heater wire, 16b represents a heater platform.

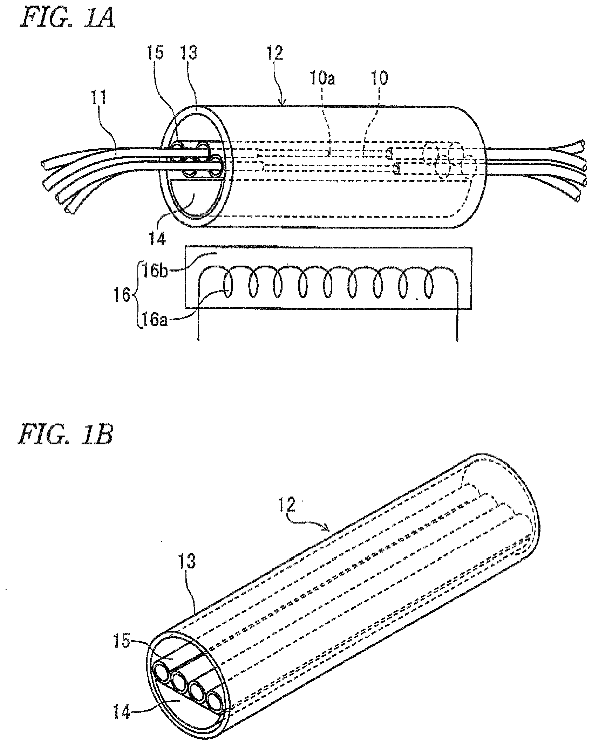

Fusion-splicing of optical fibers is performed, as shown in Fig. 1A, by removing fiber coating of an end portion to be connected of each coated optical fiber 11 thereby to expose the glass fiber portion 10 thereof, coupling the end portions of the exposed glass fiber portions 10 to each other, and melting the abutting end portions with heat. The fusion-splicing glass fiber portions 10 where the fiber coatings are removed exhibit a weak mechanical strength, including the fusion-splicing portion 10a and hence, the glass fiber portions 10 are protected and reinforced by a reinforcing member.

Generally, protection/reinforcement of the coated optical fiber fusion-splicing portion is individually performed for each coated optical fiber. However, in the embodiment, the plural coated optical fibers, after being individually fusion-splicing, are collectively reinforced together, and a single reinforcing member 12 is used for this collective reinforcement. The reinforcing member 12 according to the embodiment is configured by the heat-shrinkable tube 13 which shrinks in the radial direction by heating, the rod-shaped tensile strength body 14 which is arranged in this heat-shrinkable tube 13, and the plural tube-shaped heat-fusible adhesive members 15.

The heat-shrinkable tube 13 is formed of flexible polyolefin resin. For example, in case that four-core coated optical fibers are collectively reinforced, the heat-shrinkable tube 13 having an inner diameter of about 5 mm before shrinkage is used. Further, the heat-shrinkable tube 13 has a length of 25 mm to 60 mm, which is different depending on fusion-splicing modes.

The tensile strength body 14 is formed of, for example, glass ceramics, and uses a rod-shaped member having the length nearly equal to the length of the heat-shrinkable tube 13. Tensile strength bodies 14 having various sectional shapes having at least one flat surface are used such as a body of a semicircle section.

The tube-shaped heat-fusible adhesive member 15 is formed of a hot-melt adhesive resin which is melted by heat and solidified by cooling thereby to complete adhesion, such as an ethylene polyvinyl acetate resin. This tube-shaped heat-fusible adhesive member 15 uses a tube-shaped member having such an inner diameter that a single-core coated optical fiber (having an outer diameter of 0.25 mm to 0.9 mm) can be readily inserted therein. The tube-shaped heat-fusible adhesive members 15 corresponding to the number of the' fusion-splicing optical fibers to be lumped together (four tube-shaped heat-fusible adhesive members in case of four optical fibers) are accommodated in the single heat-shrinkable tube 13.

The plural tube-shaped heat-fusible adhesive members 15 are concentrated and accommodated in one space portion formed between the heat-shrinkable tube 13 and the tensile strength body 14. Namely, though plural space portions can be formed between the heat-shrinkable tube 13 and the tensile strength body 14 depending on the shape of the tensile strength body, also in such a case, the tube-shaped heat-fusible adhesive members 15 are not accommodated decentrally in the plural space portions, but arranged so that all of the tube-shaped heat-fusible adhesive members 15 can be accommodated in one space portion.

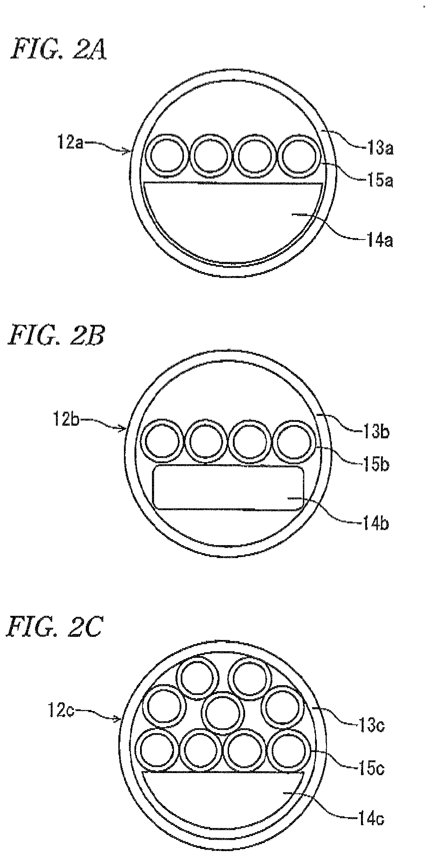

Fig. 2A, 2B, and 2C show examples of an accommodation mode of the above-mentioned tensile strength body and the tube-shaped heat-fusible adhesive member in response to the shape of the tensile strength body. Fig. 2A shows an example in which a semi-cylindrical tensile strength body 14a is used, wherein the tensile strength body 14a is arranged so that an arc-like outer surface thereof comes into contact with an inner surface of a heat-shrinkable tube 13a, and one space portion is formed between a flat surface of the tensile strength body 14a and the heat-shrinkable tube 13a. Plural tube-shaped heat-fusible adhesive members 15a are arranged in this space portion so as to form a line, whereby a reinforcing member 12a is constituted.

Fig. 2B shows an example in which a tensile strength body 14b having a rectangular section is used, wherein when the tensile strength body 14b is arranged so that two corner portions thereof come into contact with an inner surface of a heat-shrinkable tube 13b, two space portions are formed up and down between the tensile strength body 14b and the heat-shrinkable tube 13b. In an upper large space portion of these two space portions, all of plural tube-shaped heat-fusible adhesive members 15b are arranged so as to form a line, whereby a reinforcing member 12b is constituted.

Fig. 2C shows an example in which a tensile strength body 14c having a semicircle-shaped section is used, wherein the tensile strength body 14c is arranged so that an arc-like outer surface thereof comes into contact with an inner surface of a heat-shrinkable tube 13c similarly to in the example of Fig. 2A, and one space portion is formed between a flat surface of the tensile strength body 14c and the heat-shrinkable tube 13c. In this space portion, plural tube-shaped heat-fusible adhesive members 15c are arranged in a trefoil formation state, whereby a reinforcing member 12c is constituted.

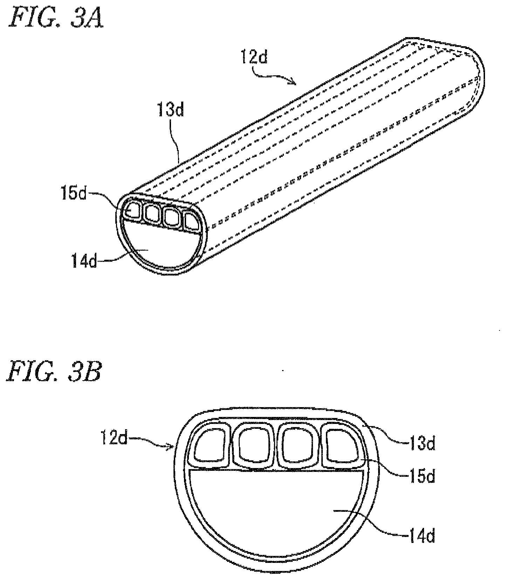

Fig. 3A and 3B show another embodiment, in which plural tube-shaped heat-fusible adhesive members, when arranged in a space portion between a tensile strength body and a heat-shrinkable tube, are arranged closely to one another so that each gap produced among the tensile strength body, the heat-shrinkable tube and the plural tube-shaped heat-fusible adhesive members has such a size that insertion of a single-core coated optical fiber is prevented. For example, similarly to in the example of Fig. 2A, a semi-cylindrical tensile strength body 14d is used, the tensile strength body 14d is arranged so that an arc-like outer surface comes into contact with an inner surface of a heat-shrinkable tube 13d, and one space portion is formed between a flat surface of the tensile strength body 14d and the heat-shrinkable tube 13d. Plural tube-shaped heat-fusible adhesive members 15d are arranged closely in this space portion so that such a gap that a coated optical fiber can be inserted therein is not produced, whereby a reinforcing member 12d is constituted.

The tube-shaped heat-fusible adhesive member 15d may be a rectangular tube formed by deforming a circular tube, or may be formed in the shape having a flat portion by squashing partially a circular arc of the heat-shrinkable tube 13d. Such the shape can be readily formed by accommodating the tensile strength body and the tube-shaped heat-fusible adhesive members in the heat-shrinkable tube in the mode of Fig. 1A, and thereafter heating the heat-shrinkable tube to the extent where the tube-shaped heat-fusible adhesive members are not melted, to shrink the heat-shrinkable tube a little.

In the reinforcing member 12d having this shape, the tensile strength body 14d and the tube-shaped heat-fusible adhesive members 15d are closely filled into the heat-shrinkable tube 13d, and held in contact with one another into the heat-shrinkable tube 13d, whereby it is possible to prevent the tensile strength body 14d and the tube-shaped heat-fusible adhesive members 15d from coming off from the heat-shrinkable tube 13d. Further, in this reinforcing member 12d, since the coated optical fiber cannot be inserted into other portions than the tube-shaped heat-fusible adhesive member 15d, erroneous insertion of the coated optical fiber is prevented and operability can be improved.

In the embodiment, as described above, the tensile strength body is arranged so that a part of its surface comes into contact with the inner surface of the heat-shrinkable tube. This mode is naturally produced in the manufacture of the reinforcing member by gravity of the tensile strength body, so that at least one space portion is formed between the heat-shrinkable tube and the tensile strength body, and an annular space portion is not produced. The heat-shrinkable tube and the tensile strength body have such sizes and shapes that all of the required tube-shaped heat-fusible adhesive members are accommodated in one space portion formed between the heat-shrinkable tube and the tensile strength body.

In case that the collective reinforcement is performed using the thus constructed reinforcing member 12, into the tube-shaped heat-fusible adhesive members 15 arranged in the heat-shrinkable tube 13, one-sided coated optical fibers (single-core coated optical fiber group on the right side or on the left side) of plural pairs of coated optical fibers 11 to be fuse-spliced to each other are inserted in advance prior to fusion-splicing. After all the fusion-splicing of the coated optical fiber in pairs have been completed, the reinforcing member 12 is moved, as shown in Fig. 1A, so that the fusion-splicing portion 10a is located in the center of the reinforcing member 12.

Thereafter, the reinforcing member 12 is heated by the heater 16. The heater 16 is composed of the heater wire 16a and the heater platform 16b. As the heater platform 16, what has a flat heating surface and a simple and general shape can be used. The reinforcing member 12 is placed, for example, so that the tensile strength body 14 is opposed to the heater platform 16b. The tube-shaped heat-fusible adhesive members 15 are uniformly heated through the tensile strength body 14. By heating by the heater 16, the tube-shaped heat-fusible adhesive members 15 are melted, the melted adhesive members 15 infill gaps in the heat-shrinkable tube 13, and the heat-shrinkable tube 13 shrinks in a radial direction thereby to push out the inner air to the outside.

The melted tube-shaped heat-fusible adhesive member 15 covers the glass fiber portion 10 of each coated optical fiber 11, the fusion-splicing portion 10a and the end portion of the not-removed fiber coating so as to include them, and protects them so that they do not come into direct contact with the fusion-spliced portions of other coated optical fibers. Further, simultaneously, the tube-shaped heat-fusible adhesive member 15 adheres to the inner surface of the heat-shrinkable tube 13 of which the diameter has been narrowed and also to the tensile strength member 14. After heating has been performed by the heater 16 for the predetermined time, a heating power source is turned off to cool the reinforcing member naturally or forcedly, and then the melted adhesive members are solidified. Thus, the fusion-splicing portion 10a in the heat-shrinkable tube 13 having the narrowed diameter, the vicinity of the fusion-splicing portion 10a, and the tensile strength body 14 are integrated thereby to be protected and reinforced.

By using the thus configured reinforcing member, without the tube-shaped heat-fusible adhesive members being arranged with the tensile strength body between as shown in Fig. 4A and 4B, the plural tube-shaped heat-fusible adhesive members can be accommodated together in one space portion. In result, the heating surface of the heater for heating the reinforcing member does not need to use the special shape such as the V-shape or the O-shape, but may have a general fiat shape, whereby the constitution of the heat-processing part can be made inexpensive. Further, since the plural coated optical fibers to be assembled are accommodated together in one space portion formed between the heat-shrinkable tube and the tensile strength body, the assembly mode does not broaden but can become compact, and the structure of a clamp part can be also made small.

While the embodiment of the invention has been described in detail, it would be apparent to those skilled in the art that various changes and modifications may be made therein without departing from the scope of the appended claims.

### Reference Signs List

10 Glass fiber portion, 10a Fusion-splicing portion, 11 Coated optical fiber, 12-12d Reinforcing member, 13-13d Heat-shrinkable tube, 14-14d Tensile strength body, 15-lSd Tube-shaped heat-fusible adhesive member, 16 Heater, 16a Heater wire, 16b Heater platform

## Claims

1. A reinforcing member for optical fiber fusion-splicing portions, which reinforces fusion-splicing portions (10a) of plural coated optical fibers (11) collectively, the reinforcing member (12, 12a-12d) comprising:
a heat-shrinkable tube (13, 13a-13d);
a rod-shaped tensile strength body (14, 14a-14d); and
plural tube-shaped heat-fusible adhesive members (15, 15a-15d) arranged in the heat-shrinkable tube (13, 13a-13d) and into which the fusion-splicing portions (10a) of the single-core coated optical fibers (11) are individually inserted,
wherein the heat-shrinkable tube (13, 13a-13d) is shrunk by heating, so that the plural tube-shaped heat-fusible adhesive members (15, 15a-15d) are held in the heat-shrinkable tube (13, 13a-13d) in contact with each other,
wherein each gap between the tensile strength body (14, 14a-14d), the heat-shrinkable tube (13, 13a-13d), and the plural tube-shaped heat-fusible adhesive members (15, 15a-15d) has a size to prevent insertion of the single-core coated optical fiber (11),
**characterized in that**
the rod-shaped tensile strength body (14, 14a-14d) is arranged to be in contact with an inner surface of the heat-shrinkable tube (13, 13a-13d), and
the rod-shaped tensile strength body (14, 14a-14d) has at least one flat surface,
wherein all of the plural tube-shaped heat-fusible adhesive members (15, 15a-15d) are arranged in one space portion formed between the flat surface of the tensile strength body (14, 14a-14d) and the heat-shrinkable tube (13, 13a-13d).

2. A reinforcing method for optical fiber fusion-splicing portions, the method comprising:
reinforcing collectively fusion-splicing portions (10a) of plural coated optical fibers (11) using the reinforcing member (12, 12a-12d) for optical fiber fusion-splicing portions (10a) according to Claim 1.

## Patentansprüche

1. Verstärkungselement für Glasfaser-Fusions-Spleißabschnitte, das Fusions-Spleißabschnitte (10a) mehrerer beschichteter Glasfasern (11) gemeinsam verstärkt, wobei das Verstärkungselement (12, 12a-12d) umfasst:
ein Wärmeschrumpfrohr (13, 13a-13d);
einen stabförmigen Zugfestigkeitskörper (14, 14a-14d); und
mehrere rohrförmige wärmeschmelzbare Klebstoffelemente (15, 15a-15d), die in dem Wärmeschrumpfrohr (13, 13a-13d) angeordnet sind und in die die Fusions-Spleißabschnitte (10a) der beschichteten Einzelkern-Glasfasern (11) einzeln eingesetzt werden,
wobei das Wärmeschrumpfrohr (13, 13a-13d) durch Erwärmen geschrumpft wird, sodass die mehreren rohrförmigen wärmeschmelzbaren Klebstoffelemente (15, 15a-15d) in dem Wärmeschrumpfrohr (13, 13a-13d) miteinander in Kontakt gehalten werden,
wobei jeder Spalt zwischen dem Zugfestigkeitskörper (14, 14a-14d), dem Wärmeschrumpfrohr (13, 13a-13d) und den mehreren rohrförmigen wärmeschmelzbaren Klebstoffelementen (15, 15a-15d) eine Größe aufweist, die Einsetzen der beschichteten Einzelkern-Glasfaser (11) verhindert,
**dadurch gekennzeichnet, dass**
der stabförmige Zugfestigkeitskörper (14, 14a-14d) angeordnet ist, mit einer Innenfläche des Wärmeschrumpfrohrs (13, 13a-13d) in Kontakt zu sein, und
der stabförmige Zugfestigkeitskörper (14, 14a-14d) mindestens eine flache Oberfläche aufweist,
wobei alle der mehreren rohrförmigen wärmeschmelzbaren Klebstoffelemente (15, 15a-15d) in einem Raumabschnitt angeordnet sind, der zwischen der flachen Oberfläche des Zugfestigkeitskörpers (14, 14a-14d) und dem Wärmeschrumpfrohr (13, 13a-13d) gebildet ist.

2. Verstärkungsverfahren für Glasfaser-Fusions-Spleißabschnitte, das Verfahren umfassend:
gemeinsames Verstärken von Fusions-Spleißabschnitten (10a) mehrere beschichteter Glasfasern (11) unter Verwendung des Verstärkungselements (12, 12a-12d) für Glasfaser-Fusions-Spleißabschnitte (10a) nach Anspruch 1.

## Revendications

1. Élément de renforcement pour des parties de fibres optiques à épissure par fusion, qui renforce des parties à épissure par fusion (10a) de plusieurs fibres optiques revêtues (11) collectivement, l'élément de renforcement (12, 12a-12d) comprenant :
un tube thermorétrécissable (13, 13a-13d) ;
un corps de résistance à la traction en forme de tige (14, 14a-14d) ; et
plusieurs éléments adhésifs thermofusibles en forme de tube (15, 15a-15d) agencés dans le tube thermorétrécissable (13, 13a-13d) et dans lesquels les parties à épissure par fusion (10a) des fibres optiques revêtues à cœur unique (11) sont individuellement insérées,
dans lequel le tube thermorétrécissable (13, 13a-13d) est rétréci par la chaleur, de sorte que les plusieurs éléments adhésifs thermofusibles en forme de tube (15, 15a-15d) soient maintenus dans le tube thermorétrécissable (13, 13a-13d) en contact les uns avec les autres,
dans lequel chaque écart entre le corps de résistance à la traction (14, 14a-14d), le tube thermorétrécissable (13, 13a-13d), et les plusieurs éléments adhésifs thermofusibles en forme de tube (15, 15a-15d) présente une taille pour empêcher l'insertion de la fibre optique revêtue à cœur unique (11),
**caractérisé en ce que**
le corps de résistance à la traction en forme de tige (14, 14a-14d) est agencé pour être en contact avec une surface intérieure du tube thermorétrécissable (13, 13a-13d), et
le corps de résistance à la traction en forme de tige (14, 14a-14d) présente au moins une surface plate,
dans lequel tous les plusieurs éléments adhésifs thermofusibles en forme de tube (15, 15a-15d) sont agencés dans une partie d'espace formée entre la surface plate du corps de résistance à la traction (14, 14a-14d) et le tube thermorétrécissable (13, 13a-13d).

2. Procédé de renforcement pour des parties de fibres optiques à épissure par fusion, le procédé comprenant l'étape consistant à :
renforcer collectivement des parties à épissure par fusion (10a) de plusieurs fibres optiques revêtues (11) en utilisant l'élément de renforcement (12, 12a-12d) pour des parties de fibres optiques à épissure par fusion (10a) selon la revendication 1.
